# EUROPÄISCHE PATENTSCHRIFT

(11) **EP 2 840 281 B1**
(45) Veröffentlichungstag und Bekanntmachung des Hinweises auf die Patenterteilung: **08.05.2019**
(21) Anmeldenummer: 14181329.5
(22) Anmeldetag: 18.08.2014
(51) Int. Cl.: F16F 13/26

(54) **HYDROLAGER**
HYDRAULIC BEARING
SUPPORT HYDRAULIQUE

(30) Priorität: 20.08.2013 DE 102013109006
(43) Veröffentlichungstag der Anmeldung: 25.02.2015
(73) Patentinhaber: Vibracoustic GmbH, 64293 Darmstadt (DE)
(72) Erfinder: Dr. Eckel, Hans-Gerd, 69514 Laudenbach (DE); Röhrig, Bernhard, 64646 Heppenheim (DE)
(74) Vertreter: Flügel Preissner Schober Seidel

(56) Entgegenhaltungen:
- EP-A1- 2 698 559
- EP-A1- 2 698 560
- EP-A2- 2 028 392
- DE-A1- 19 807 868
- DE-A1-102010 060 885
- US-A1- 2002 036 372
- US-A1- 2005 275 145

## Beschreibung

Die vorliegende Erfindung betrifft ein Hydrolager, insbesondere ein schaltbares Hydrolager, umfassend ein Traglager und ein Auflager, die durch eine elastomere Tragfeder miteinander verbunden sind, eine Arbeitskammer und eine Ausgleichskammer, die mit einem Fluid gefüllt und durch eine Trennwand voneinander getrennt und über einen in die Trennwand eingebrachten Dämpfungskanal miteinander verbunden sind, und einen Tilgerkanal, der über eine Stelleinrichtung schaltbar ist, wobei in einer ersten Schaltstellung der Stelleinrichtung der Tilgerkanal inaktiv und in einer zweiten Schaltstellung der Stelleinrichtung der Tilgerkanal aktiv ist, und wobei die Stelleinrichtung einen elektrisch ansteuerbaren Elektromagneten und einen über eine elastische Membran schwingfähig aufgehängten Anker aufweist. Die Membran ist von einem Begrenzungselement umgeben, das derart ausgebildet ist, dass sich die Membran in der ersten Schaltstellung an das Begrenzungselement anlegt und in der zweiten Schaltstellung von dem Begrenzungselement beabstandet ist.

Lager der vorgenannten Art werden zur Lagerung von Kraftfahrzeugaggregaten verwendet, um die während des Betriebs auftretenden Schwingungen zu dämpfen bzw. zu tilgen. Hierbei weist das Hydrolager mehrere Dämpfungs- oder Tilgungssysteme auf, die bei unterschiedlichen Anregungsfrequenzen eine Dämpfungs- oder Tilgungswirkung erzielen. So bewirkt die aus einem elastomeren Material bestehende Tragfeder eine akustische Isolierung. Eine Dämpfung niederfrequenter Schwingungen mit großer Amplitude erfolgt über den Dämpfungskanal. Hierbei führen die eingeleiteten Schwingungen zu einer Bewegung der Tragfeder, wodurch ein hydraulischer Druck innerhalb der Arbeitskammer aufgebaut wird. Infolge des Drucks strömt das Fluid von der Arbeitskammer über den Dämpfungskanal in die Ausgleichskammer. Aufgrund des geringen Durchmessers des Dämpfungskanals und der damit verbundenen hohen mechanischen Übersetzung, die sich aus dem äquivalenten, verdrängenden Querschnitt der Tragfeder in Relation zu dem Dämpfungskanalquerschnitt ergibt, werden die eingeleiteten Schwingungen getilgt beziehungsweise gedämpft.

Zur Entkopplung hochfrequenter, kleinamplitudiger Schwingungen, das heißt im akustisch relevanten Bereich, ist die Einbringung einer elastischen Membran mit oder ohne Spiel innerhalb der Trennwand bekannt. Hierbei schwingt die Membran bei hochfrequenten, kleinamplitudigen Schwingungen, so dass eine Dämpfung über den Dämpfungskanal entkoppelt wird.

Darüber hinaus ist es bekannt, zur Reduzierung der dynamischen Lagersteifigkeit im Motorleerlauf in die Trennwand eine Durchbrechung bzw. einen Kanal, der auch als Leerlaufkanal oder Tilgerkanal bezeichnet werden kann, einzubringen, der mittels einer schaltbaren Stelleinrichtung freigebbar und verschließbar ist. Derartige Lager werden auch als schaltbare Lager bezeichnet. Je nach Motordrehzahl wird der Kanal geöffnet oder geschlossen. Bei einem geschlossenen Kanal arbeitet das Lager wie ein herkömmliches Lager, in dem niederfrequente Schwingungen mit großen Amplituden durch eine Flüssigkeitsverschiebung innerhalb des Dämpfungskanals gedämpft und hochfrequente Schwingungen mit kleinen Amplituden mithilfe der Membran isoliert bzw. entkoppelt werden. In der Offenstellung des Kanals schwingt eine Flüssigkeitssäule innerhalb des Kanals, so dass die im Motorleerlauf auftretenden hochfrequenten Motorschwingungen aufgrund der kleinen wirksamen Federrate in deutlich geminderter Form auf das Chassis übertragen werden.

Hydrolager dieser Art sind aus DE 43 30 560 C1 und EP 1 688 639 B1 bekannt. Darin sind schaltbare Hydrolager offenbart, deren Leerlaufkanal mittels einer mit Unterdruck beaufschlagbaren Stelleinrichtung freigebbar oder verschließbar ist.

Nachteilig hierbei ist, dass bei modernen Kraftfahrzeugen, insbesondere bei Kraftfahrzeugen mit Hybrid- oder Elektroantrieben, eine Energieversorgung mit Unterdruck nicht in ausreichender Menge verfügbar ist.

Zur Umgehung dieses Nachteils geht aus EP 2 028 392 B1 ein Hydrolager hervor, dessen Stelleinrichtung über einen elektrisch ansteuerbaren Elektromagneten schaltbar ist. Hierin ist zur Bildung eines Tilgerkanals in eine Trennwand eine Öffnung eingebracht, die in Axialrichtung nach unten von einer topfförmigen Stützwandung und einem Elektromagneten begrenzt wird. In den Tilgerkanal erstreckt sich sackartig eine teilweise flexible Membran, die zumindest teilweise aus einem magnetisierbaren Elastomer gefertigt oder mit einem Metallteil versehen ist. Durch Anlegen eines Stromes an dem Elektromagneten legt sich die Membran an der Stützwandung und dem Elektromagneten an, so dass der Tilgerkanal inaktiv ist. Zur Aktivierung des Tilgerkanals wird die Stromzufuhr zum Elektromagneten unterbrochen. Dadurch ist die Membran von dem Elektromagneten beabstandet und kann mit der im Tilgerkanal befindlichen Flüssigkeitssäule gegen die in Axialrichtung eingeleiteten Schwingungen schwingen. Nachteilig hierbei ist, dass infolge der topfförmigen Ausgestaltung der Stützwandung die Membran bei aktivem Tilgerkanal an der Stützwandung anliegt. Dies hat zur Folge, dass die Blähfederrate der Membran nicht wirksam ist. Hieraus ergibt sich eine geringere mechanische Übersetzung, so dass die dynamische Federrate des Hydrolagers im Motorleerlauf nicht ausreichend abgesenkt wird.

In EP 2 698 560 A1 ist ein Hydrolager offenbart, in dessen Trennwand eine Durchtrittsöffnung eingebracht ist, die einen Bestandteil eines durch eine Stelleinrichtung schaltbaren Tilgerkanals bildet. Die Stelleinrichtung weist einen axial in Richtung der eingeleiteten Schwingungen schwingfähigen, elektrisch ansteuerbaren Elektromagneten auf, der als Anker ausgebildet ist. Der Anker und die Trennwand sind durch eine rollbalgförmig ausgebildete und sich axial erstreckende Membran aus gummielastischem Werkstoff relativ schwingfähig miteinander verbunden. Die erste Membran ist stirnseitig einerseits mit der Trennwand und stirnseitig andererseits mit dem Anker flüssigkeitsdicht verbunden.

Ferner ist in EP 2 698 559 A1 ein Hydrolager offenbart, das einen Tilgerkanal aufweist, der durch eine Stelleinrichtung schaltbar ist. Die Stelleinrichtung ist innerhalb einer Ausnehmung des Traglagers angeordnet und umfasst einen elektrisch ansteuerbaren Elektromagneten und einen axial in Richtung der eingeleiteten Schwingungen schwingfähigen Anker, der durch einen Elektromagneten relativ zu diesem bewegbar und zur funktionstechnischen Abkopplung des Tilgerkanals von einem Arbeitsraum flüssigkeitsdicht an das Traglager anlegbar ist.

Der vorliegenden Erfindung liegt daher die **Aufgabe** zugrunde, ein Hydrolager der eingangs genannten Art derart weiterzubilden, dass die dynamische Federrate des Hydrolagers im Motorleerlauf bei den wichtigsten anregenden Frequenzen deutlich abgesenkt wird.

Zur **Lösung** dieser Aufgabe wird ein Hydrolager mit den Merkmalen des Anspruchs 1 vorgeschlagen.

Bevorzugte Ausgestaltungen des erfindungsgemäßen Hydrolagers sind Gegenstand der abhängigen Ansprüche.

Bei dem erfindungsgemäßen Hydrolager ist die Membran von einem Begrenzungselement umgeben, das derart ausgebildet ist, dass sich die Membran in der ersten Schaltstellung an das Begrenzungselement anlegt, so dass die Membran nicht resonant schwingen kann, und in der zweiten Schaltstellung von dem Begrenzungselement beabstandet ist. Das Begrenzungselement ist an dem Anker festgelegt. Im ersten Schaltzustand, d.h. im Fahrbetrieb, liegt die Membran, die auch als Tilgerfeder bezeichnet werden kann, an dem Begrenzungselement an und kann somit nicht resonant schwingen. Dadurch ist die Volumennachgiebigkeit der Tilgerfeder außer Funktion, so dass das Lagerverhalten eines konventionellen Hydrolagers erreicht wird, wobei eine Dämpfung durch einen Flüssigkeitsaustausch zwischen der Arbeitskammer und der Ausgleichskammer über den Dämpfungskanal erfolgt. Insbesondere hat die Tilgerfeder durch die Anlage an dem Begrenzungselement keinen Einfluss auf die Bedämpfung der außerhalb des Motorleerlaufs auftretenden Schwingungen, wie beispielsweise zur Stuckerbedämpfung.

Zur Bedämpfung bzw. Betilgung der im Motorleerlauf auftretenden hochfrequenten Schwingungen, wird der Tilgerkanal durch Ansteuerung des Elektromagneten aktiviert. Dadurch löst sich der Anker von dem Magneten und ist schwingfähig an der Membran innerhalb des Hydrolagers aufgehängt. Dieser Modus entspricht dem zweiten Schaltzustand. Dadurch sind sowohl die axiale Federrate der Tilgerfeder parallel zur Hydrolagersymmetrieachse als auch die Blähfederrate der Tilgerfeder wirksam. Hierbei bildet die erste Tilgermasse die Fluidmasse im Tilgerkanal und die zweite Tilgermasse entspricht dem Anker. Die erste Tilgereigenfrequenz der ersten Tilgermasse leitet sich aus der Fluidmasse im Tilgerkanal, der Blähfederrate der Tragfeder und der Blähfederrate der Tilgerfeder ab. Die zweite Tilgereigenfrequenz der zweiten Tilgermasse leitet sich aus der axialen Federrate der Tilgerfeder und der Masse des Ankers ab.

Die Tilgereigenfrequenzen können dabei so eingestellt werden, dass die dynamische Federrate des Hydrolagers im Motorleerlauf bei den wichtigsten anregenden Frequenzen deutlich abgesenkt werden. So liegen diese Frequenzen bei einem Sechszylindermotor der dritten und sechsten Ordnung und bei einem Vierzylindermotor der zweiten und vierten Ordnung bei 35 bis 40 Hz und 70 bis 80 Hz.

Darüber hinaus sind die axiale Federrate der Tilgerfeder und deren Blähfederrate mechanisch übersetzt. Diese mechanische Übersetzung ergibt sich aus der Relation der hydraulischen Wirkfläche der Tragfeder zur hydraulischen Wirkfläche der Tilgerfeder. Übersetzungen in gekoppelten mechanischen Systemen sind mit dem Quadrat des Übersetzungsverhältnisses wirksam. Im vorliegenden Fall beträgt das Quadrat des Übersetzungsverhältnisses ca. zwischen 80 und 120, vorzugweise ca. 100. Dadurch wird eine hohe Wirkhöhe der schwingenden Tilgermassen erreicht, so dass die im Leerlauf auftretenden hochfrequenten Schwingungen getilgt werden. Somit kann die dynamische Federrate des Hydrolagers im Leerlauf bei den wichtigsten anregenden Frequenzen deutlich abgesenkt werden. Ferner muss kein Kompromiss zwischen der axialen Federrate der Tilgerfeder und deren Blähfederrate eingegangen werden.

Die hierbei in Rede stehenden leerlauftypischen, motorerregten Frequenzen betragen ca. 20 Hz bis 40 Hz, wobei die Anregungsamplitude ca. zwischen 0,1 mm und 0,3 mm ist. Im Dämpfungsfall, d.h. bei fahrbahnerregten großen Amplituden, betragen die Frequenzen ca. 10 Hz und die Anregungsamplitude ca. zwischen 1 mm und 2 mm.

In einer vorteilhaften Ausgestaltung ist das Begrenzungselement als konischer Schirm ausgebildet. Die konische Ausgestaltung bewirkt, dass die Membran bzw. die Tilgerfeder in der ersten Schaltstellung an dem konischen Schirm anliegt und in der zweiten Schaltstellung von dem Begrenzungselement beabstandet ist.

Das Begrenzungselement kann form-, stoff- und/oder kraftschlüssig mit dem Anker verbunden sein.

Ferner kann das Begrenzungselement die Membran form- und/oder kraftschlüssig an dem Anker fixieren. Die Tilgercharakteristik, also die erste und zweite Tilgereigenfrequenz, kann durch die elastische Nachgiebigkeit der Membran eingestellt werden, wobei die Schwingfähigkeit des Ankers relativ zur Trennwand praktisch ausschließlich durch die Federeigenschaften der Membran bestimmt wird.

In die Trennwand kann eine Öffnung eingebracht sein, wobei die Öffnung, die elastische Membran und der Anker den Tilgerkanal definieren. Vorteilhaft ist die Membran mit einem ersten freien Ende die Öffnung umgebend mit der Trennwand und mit einem zweiten freien Ende mit dem Anker verbunden, wobei die Membran den Tilgerkanal flüssigkeitsdicht abschließt. Der Anker kann dem Arbeitsraum axial gegenüberliegend angeordnet sein.

In einer vorteilhaften Ausgestaltung umschließt der Elektromagnet einen in Axialrichtung abragenden Führungsstift, der in einen Schacht des Ankers eingreift, um den Anker in Axialrichtung zu führen. Die axiale Führung bewirkt, dass der Anker innerhalb des Hydrolagers keine Taumelbewegungen ausführen kann und sich somit nur axial in Richtung der eingeleiteten Schwingungen bewegen kann. Somit wird ein Verklemmen des Ankers und damit einhergehend ein Deaktivieren der Wirkung des Tilgerkanals verhindert.

Weiterhin vorteilhaft umschließt der Elektromagnet einen Permanentmagneten. Durch die Kombination eines Elektromagneten mit einem Permanentmagneten wird ein gutes Fail-Safe-Verhalten erzielt. Oberhalb der Leerlaufdrehzahl des gelagerten Motors ist der Elektromagnet nicht bestromt und deshalb nicht wirksam, so dass der Anker durch den Permanentmagneten arretiert wird. Im Motorleerlauf oder in einem leerlaufnahen Drehzahlbereich wird der Elektromagnet bestromt und ein Magnetfeld des Elektromagneten wirkt der Kraft des Permanentmagneten entgegen. Dadurch ist der Anker von dem Elektromagneten beabstandet und kann in Axialrichtung schwingen. Ferner ist es auch möglich, zur Arretierung des Ankers den Elektromagneten zu bestromen und zur schwingfähigen Anordnung des Ankers die Bestromung des Elektromagneten zu unterbrechen, wobei die Kraft des Permanentmagneten dafür sorgt, dass der Anker von dem Elektromagneten beabstandet ist.

Vorteilhaft ist der Anker aus einem ferromagnetischen Werkstoff hergestellt.

Der Elektromagnet kann durch einen Gleichstrom oder Wechselstrom ansteuerbar sein. Der Betrieb mittels Gleichstrom ermöglicht eine Schaltfunktion ein und aus.

In einer vorteilhaften Ausgestaltung ist die Membran mit einer Abschlussmembran einstückig verbunden, die die Ausgleichskammer begrenzt. Die Abschlussmembran nimmt im Wesentlichen drucklos das Volumen der aus dem Arbeitsraum in die Ausgleichskammer verdrängten Dämpfungsflüssigkeit auf.

Des Weiteren kann die Trennwand als Düsenkäfig ausgebildet sein und zwei Düsenscheiben umfassen, wobei zwischen den Düsenscheiben eine biegeweiche elastische Entkopplungsmembran eingebracht ist. Die Entkopplungsmembran bewirkt eine Entkopplung der Schwingungen mit hohen Frequenzen und kleinen Amplituden, wie diese beispielsweise im Fahrbetrieb auftreten. Hierbei handelt es sich um Frequenzen von ca. 50 Hz bis 100 Hz sowie um Amplituden von ca. kleiner als 0,1 mm.

Nachfolgend wird das erfindungsgemäße Hydrolager anhand eines Ausführungsbeispiels näher erläutert. Hierbei zeigen schematisch:
- Fig. 1: einen Querschnitt durch das erfindungsgemäße Hydrolager im ersten Schaltzustand und
- Fig. 2: einen Querschnitt durch das erfindungsgemäße Hydrolager im zweiten Schaltzustand.

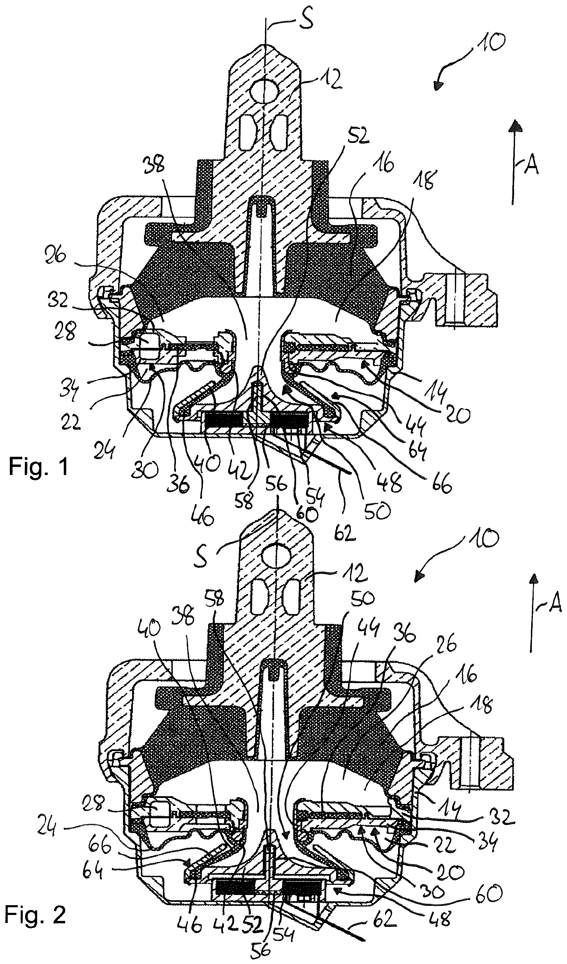

In den Fig. 1 und 2 ist ein erfindungsgemäßes Hydrolager 10 für ein Kraftfahrzeug zur Dämpfung der im Fahrbetrieb auftretenden Schwingungen gezeigt.

Das Hydrolager 10 weist ein Traglager 12 und ein Auflager 14 auf, wobei sich das Traglager 12 über eine aus einem elastomeren Werkstoff gefertigte Tragfeder 16 auf dem Auflager 14 abstützt. Die Tragfeder 16 begrenzt eine Arbeitskammer 18, die durch eine Trennwand 20 von einer Ausgleichskammer 22 getrennt ist. Die Ausgleichskammer 22 wird ihrerseits durch eine Abschlussmembran 24 begrenzt. Beide Kammern 18, 22 sind mit einem Fluid 26 gefüllt und durch einen in die Trennwand 20 eingebrachten Dämpfungskanal 28 flüssigkeitsleitend miteinander verbunden.

Die Trennwand 20 ist als Düsenkäfig 30 ausgebildet und weist eine obere Düsenscheibe 32 und eine untere Düsenscheibe 34 auf. Zwischen den beiden Düsenscheiben 32, 34 ist eine Entkopplungsmembran 36 aus einem elastischen Werkstoff angeordnet.

Ferner ist in die Trennwand 20 in Richtung der Hydrolagersymmetrieachse S eine Öffnung 38 eingebracht. Die Öffnung 38 ist von einer elastischen Membran 40 umgeben, die einstückig mit der Abschlussmembran 24 ausgebildet ist und sich entgegen der Axialrichtung A von der Trennwand 20 weg erstreckt. Die Membran 40 ist an ihrem ersten freien Ende 42 mit einem mit der Trennwand 20 verbundenen Befestigungselement 44 stoffschlüssig verbunden, vorzugsweise anvulkanisiert oder angeklebt. Ferner ist die Membran 40 an ihrem zweiten freien Ende 46 mit einer Stelleinrichtung 48 verbunden. Die Öffnung 38, die Membran 40 und die Stelleinrichtung 48 bilden zusammen einen Tilgerkanal 50.

Die Stelleinrichtung 48 weist einen Anker 52 aus einem ferromagnetischen Material, einen Elektromagneten 54 und einen Permanentmagneten 56 auf. Der Anker 52 ist mit dem zweiten freien Ende 46 der Membran 40 verbunden. Der Elektromagnet 54 umschließt den Permanentmagneten 56 sowie einen sich in Axialrichtung A erstreckenden Führungsstift 58. Der Führungsstift 58 ist in einen in dem Anker 52 ausgebildeten Schacht 60 eingeführt, um den Anker 52 bei einer Bewegung in Axialrichtung A zu führen. Der Elektromagnet 54 ist fest mit dem Traglager 12 verbunden und über eine aus dem Traglager 12 herausführende elektrische Leitung 62 ansteuerbar.

In einem ersten Schaltzustand, d.h. im Fahrbetrieb, ist der Elektromagnet 54 nicht bestromt, so dass der Anker 52 durch die Magnetkraft des Permanentmagneten 56 am Elektromagneten 54 gehalten wird, wie in Fig. 1 dargestellt ist. In einem zweiten Schaltzustand, d.h. im Motorleerlauf, ist der Elektromagnet 54 bestromt. Dadurch erzeugt dieser eine Kraft die derjenigen des Permanentmagneten 56 entgegenwirkt, so dass der Anker 52 vom Elektromagneten 54 abhebt und durch die Membran 40 in einer schwingfähigen Position gehalten wird.

Der Anker 52 weist ferner ein Begrenzungselement 64 auf, das als konischer Schirm 66 ausgebildet ist und die Membran 40 umgibt. Die Membran 40 legt sich im ersten Schaltzustand an den Schirm 66 an, wie in Fig. 1 gezeigt ist. Im zweiten Schaltzustand ist die Membran 40 von dem Schirm 66 beabstandet, wie in Fig. 2 dargestellt ist. Das Begrenzungselement 64 kann form- kraft- und/oder stoffschlüssig mit dem Anker 52 verbunden sein. Ferner kann das Begrenzungselement 64 dazu verwendet werden, um die Membran 40 an dem Anker 52 festzulegen.

Die Funktionsweise des erfindungsgemäßen Hydrolagers kann wie folgt beschrieben werden. Die während des Fahrbetriebs auftretenden hochfrequenten Schwingungen mit kleinen Amplituden werden durch die Entkopplungsmembran 36 isoliert. Hierbei schwingt die zwischen den Düsenscheiben 32, 34 eingebrachte Entkopplungsmembran 36 in Richtung der eingeleiteten Schwingungen und entkoppelt so die Dämpfung über den Dämpfungskanal 28. Derartige von der Verbrennungskraftmaschine eingeprägten Schwingungen werden von der Betriebsdrehzahl und der Zylinderanzahl, d.h. der anregenden Ordnung, bestimmt. Beispielsweise beträgt die dominant anregende Frequenz eines Motors mit Sechszylindern und Viertakt bei 6000 U/min 300 Hz.

Die im Fahrbetrieb auftretenden niederfrequenten Schwingungen von ca. 10 Hz mit großer Amplitude werden durch den Dämpfungskanal 28 gedämpft. Hierbei strömt das Fluid 26 von der Arbeitskammer 18 in die Ausgleichskammer 22 über den Dämpfungskanal 28 hin und her. Aufgrund des geringen Durchmessers des Dämpfungskanals 28 und der damit verbundenen hohen mechanischen Übersetzung werden hohe Fluidmassen wirksam und damit kräftige Tilgereffekte des Fluids 26 im Dämpfungskanal 28 erschlossen. Damit werden die eingeleiteten Schwingungen bedämpft. Daneben ist der Fluidtilger auch durch Wandreibung und die viskosen Eigenschaften des Fluids 26 wirksam.

Die im Leerlauf auftretenden Schwingungen werden durch den Tilgerkanal 50 und dem schwingfähig aufgehängten Anker 52 gedämpft bzw. getilgt. Hierzu wird der Elektromagnet 54 bestromt (zweiter Schaltzustand), so dass das Magnetfeld des Elektromagneten 54 der Kraft des Permanentmagneten 56 entgegenwirkt und der Anker 52 von dem Elektromagneten 54 in Axialrichtung A abhebt, wie in Fig. 2 dargestellt ist. Über die elastische Membran 40 ist der Anker 52 schwingfähig aufgehängt und schwingt mit der Flüssigkeitssäule im Tilgerkanal 50, um so die im Leerlauf eingeprägten Schwingungen zu dämpfen bzw. zu tilgen.

Wie bereits zuvor erläutert, ist die Membran 40 von dem Begrenzungselement 64 im zweiten Schaltzustand beabstandet. Dadurch sind sowohl die axiale Federrate der Membran 40 parallel zur Hydrolagersymmetrieachse S als auch die Blähfederrate der Membran 40 wirksam. Hierbei bildet die erste Tilgermasse das Fluid 26 im Tilgerkanal 50 und die zweite Tilgermasse entspricht dem Anker 52. Die erste Tilgereigenfrequenz der ersten Tilgermasse leitet sich aus der Fluidmasse im Tilgerkanal 50, der Blähfederrate der Tragfeder 16 und der Blähfederrate der Membran 40 ab. Die zweite Tilgereigenfrequenz der zweiten Tilgermasse leitet sich aus der axialen Federrate der Membran 40 und der Masse des Ankers 52 ab. Die Tilgereigenfrequenzen können dabei so eingestellt werden, dass die dynamische Federrate des Hydrolagers 10 im Motorleerlauf bei den wichtigsten anregenden Frequenzen deutlich abgesenkt werden. So liegen diese Frequenzen bei einem Sechszylindermotor der dritten und sechsten Ordnung und bei einem Vierzylindermotor der zweiten und vierten Ordnung bei 35 bis 40 Hz und 70 bis 80 Hz. Darüber hinaus sind die axiale Federrate der Membran 40 und deren Blähfederrate mechanisch übersetzt. Diese mechanische Übersetzung ergibt sich aus der Relation der hydraulischen Wirkfläche der Tragfeder 16 zur hydraulischen Wirkfläche der Membran 40. Übersetzungen in gekoppelten mechanischen Systemen sind mit dem Quadrat des Übersetzungsverhältnisses wirksam. Im vorliegenden Fall beträgt das Quadrat des Übersetzungsverhältnisses ca. zwischen 80 und 120, vorzugweise ca. 100. Dadurch wird eine hohe Wirkhöhe der schwingenden Tilgermassen erreicht, so dass die im Leerlauf auftretenden hochfrequenten Schwingungen getilgt werden. Somit kann die dynamische Federrate des Hydrolagers 10 im Leerlauf bei den wichtigsten anregenden Frequenzen deutlich abgesenkt werden

Im ersten Schaltzustand, d.h. im Fahrbetrieb, ist der Elektromagnet nicht bestromt, so dass der Anker 52 durch die Magnetkraft des Permanentmagneten 56 an dem Elektromagneten 54 anliegt. Wie in Fig. 1 ersichtlich ist, liegt die Membran 40 an dem Begrenzungselement 64 an und kann nicht resonant schwingen. Dadurch ist die Volumennachgiebigkeit der Membran 40 außer Funktion, so dass das Lagerverhalten eines konventionellen Hydrolagers erreicht wird, indem eine Dämpfung über einen Flüssigkeitsaustausch zwischen der Arbeitskammer 16 und der Ausgleichskammer 22 über den Dämpfungskanal 28 erfolgt. Insbesondere hat die Membran 40 durch die Anlage an dem Begrenzungselement 64 keinen Einfluss auf die Bedämpfung der außerhalb des Motorleerlaufs auftretenden Schwingungen, wie beispielsweise zur Stuckerbedämpfung.

Das erfindungsgemäße Hydrolager 10 zeichnet sich durch die Anordnung eines die Membran 40 umgebenden als konischen Schirm 66 ausgebildeten Begrenzungselementes 64 aus. Im ersten Schaltzustand, d.h. im Fahrbetrieb, kann sich die Membran 40 an das Begrenzungselement 64 anlegen, so dass die Membran 40 nicht resonant schwingen kann. Dadurch ist die Volumennachgiebigkeit der Tilgerfeder außer Funktion, so dass das Lagerverhalten eines konventionellen Hydrolagers erreicht wird. Insbesondere hat die Membran 40 durch die Anlage an dem Begrenzungselement 64 keinen Einfluss auf die Bedämpfung der außerhalb des Motorleerlaufs auftretenden Schwingungen, wie beispielsweise zur Stuckerbedämpfung. Im zweiten Schaltzustand ist die Membran 40 von dem Begrenzungselement 64 beabstandet. Dadurch ist die axiale Federrate der Membran 40 parallel zur Hydrolagersymmetrieachse S als auch die Blähfederrate der Membran 40 wirksam. Hieraus resultiert eine hohe mechanische Übersetzung und damit einhergehend eine deutliche Absenkung der dynamischen Federrate des Hydrolagers 10 bei den wichtigsten anregenden Frequenzen im Motorleerlauf.

### Bezugszeichenliste

- 10: Hydrolager
- 12: Traglager
- 14: Auflager
- 16: Tragfeder
- 18: Arbeitskammer
- 20: Trennwand
- 22: Ausgleichskammer
- 24: Abschlussmembran
- 26: Fluid
- 28: Dämpfungskanal
- 30: Düsenkäfig
- 32: obere Düsenscheibe
- 34: untere Düsenscheibe
- 36: Entkopplungsmembran
- 38: Öffnung
- 40: elastische Membran
- 42: erstes freies Ende
- 44: Befestigungselement
- 46: zweites freies Ende
- 48: Stelleinrichtung
- 50: Tilgerkanal
- 52: Anker
- 54: Elektromagneten
- 56: Permanentmagneten
- 58: Führungsstift
- 60: Schacht
- 62: elektrische Leitung
- 64: Begrenzungselement
- 66: konischer Schirm
- S: Hydrolagersymmetrieachse
- A: Axialrichtung

## Patentansprüche

1. Hydrolager (10), insbesondere ein schaltbares Hydrolager, umfassend ein Traglager (12) und ein Auflager (14), die durch eine elastomere Tragfeder (16) miteinander verbunden sind, eine Arbeitskammer (18) und eine Ausgleichskammer (22), die mit einem Fluid (26) gefüllt und durch eine Trennwand (20) voneinander getrennt und über einen in die Trennwand (20) eingebrachten Dämpfungskanal (28) miteinander verbunden sind, und einen Tilgerkanal (50), der über eine Stelleinrichtung (48) schaltbar ist, wobei in einer ersten Schaltstellung der Stelleinrichtung (48) der Tilgerkanal (50) inaktiv und in einer zweiten Schaltstellung der Stelleinrichtung (48) der Tilgerkanal (50) aktiv ist, wobei die Stelleinrichtung (48) einen elektrisch ansteuerbaren Elektromagneten (54) und einen über eine elastische Membran (40) schwingfähig aufgehängten Anker (52) aufweist, und wobei die Membran (40) von einem Begrenzungselement (64) umgeben ist, das derart ausgebildet ist, dass sich die Membran (40) in der ersten Schaltstellung an das Begrenzungselement (64) anlegt, so dass die Membran (40) nicht resonant schwingen kann, und in der zweiten Schaltstellung von dem Begrenzungselement (64) beabstandet ist, **dadurch gekennzeichnet, dass** das Begrenzungselement (64) an dem Anker (52) festgelegt ist.

2. Hydrolager nach Anspruch 1, **dadurch gekennzeichnet, dass** das Begrenzungselement (64) als konischer Schirm (66) ausgebildet ist.

3. Hydrolager nach einem der vorhergehenden Ansprüche, **dadurch gekennzeichnet, dass** das Begrenzungselement (64) die Membran (40) form- und/oder kraftschlüssig an dem Anker (52) fixiert.

4. Hydrolager nach einem der vorhergehenden Ansprüche, **dadurch gekennzeichnet, dass** in die Trennwand (20) einen Öffnung (38) eingebracht ist, wobei die Öffnung (38), die elastische Membran (40) und der Anker (52) den Tilgerkanal (50) definieren.

5. Hydrolager nach einem der vorhergehenden Ansprüche, **dadurch gekennzeichnet, dass** der Elektromagnet (54) einen in Axialrichtung (A) abragenden Führungsstift (58) umschließt, der in einen Schacht (60) des Ankers (52) eingreift, um den Anker (52) in Axialrichtung (A) zu führen.

6. Hydrolager nach einem der vorhergehenden Ansprüche, **dadurch gekennzeichnet, dass** der Anker (52) aus einem ferromagnetischen Werkstoff hergestellt ist.

7. Hydrolager nach einem der vorhergehenden Ansprüche, **dadurch gekennzeichnet, dass** der Elektromagnet (54) einen Permanentmagneten (56) umschließt.

8. Hydrolager nach einem der vorhergehenden Ansprüche, **dadurch gekennzeichnet, dass** der Elektromagnet (54) durch einen Gleichstrom oder Wechselstrom ansteuerbar ist.

9. Hydrolager nach einem der vorhergehenden Ansprüche, **dadurch gekennzeichnet, dass** die Membran (40) mit einer Abschlussmembran (24) einstückig verbunden ist, die die Ausgleichskammer (22) begrenzt.

10. Hydrolager nach einem der vorhergehenden Ansprüche, **dadurch gekennzeichnet, dass** die Trennwand (20) als Düsenkäfig (30) ausgebildet ist und zwei Düsenscheiben (32, 34) umfasst, wobei zwischen den Düsenscheiben (32, 34) eine biegeweiche elastische Entkopplungsmembran (36) eingebracht ist.

## Claims

1. Hydromount (10), in particular a switchable hydromount, comprising a carrying mount (12) and a support mount (14) connected to each other by an elastomeric suspension spring (16); a working chamber (18) and a compensation chamber (22), the working chamber (18) and the compensation chamber (22) being filled with a fluid (26) and separated from each other by a partition (20) and connected to each other via a damping channel (28) inserted into the partition (20); and an absorber channel (50), which is switchable via an actuating device (48), wherein the absorber channel (50) is inactive in a first switching position of the actuating device (48) and the absorber channel (50) is active in a second switching position of the actuating device (48), wherein the actuating device (48) has an electrically drivable electromagnet (54) and an armature (52) which is suspended via an elastic membrane (40) so as to allow the armature (52) to vibrate, wherein the membrane (40) is surrounded by a limiting member (64) configured such that the membrane (40) abuts against the limiting member (64) so that the membrane (40) cannot resonate in the first switching position and is spaced from the limiting member (64) in the second switching position, **characterised in that** the limiting member (64) is fixed to the armature (52).

2. Hydromount according to claim 1, **characterised in that** the limiting member (64) is configured as a conical shield (66).

3. Hydromount according to one of the preceding claims, **characterised in that** the limiting member (64) fixes the membrane (40) on the armature (52) by at least one of a positive and a frictional engagement.

4. Hydromount according to one of the preceding claims, **characterised in that** an opening (38) is disposed in the partition (20), and wherein the opening (38), the elastic membrane (40) and the armature (52) define the absorber channel (50).

5. Hydromount according to one of the preceding claims, **characterised in that** the electromagnet (54) encloses a guide pin (58) protruding in an axial direction (A), and wherein the guide pin (58) reaches into a well (60) of the armature (52) so as to guide the armature (52) in the axial direction (A).

6. Hydromount according to one of the preceding claims, **characterised in that** the armature (52) is made from a ferromagnetic material.

7. Hydromount according to one of the preceding claims, **characterised in that** the electromagnet (54) encloses a permanent magnet (56).

8. Hydromount according to one of the preceding claims, **characterised in that** the electromagnet (54) is drivable via a direct current or an alternating current.

9. Hydromount according to one of the preceding claims, **characterised in that** the membrane (40) is integrally connected to a cover membrane (24) so as to limit the compensation chamber (22).

10. Hydromount according one of the preceding claims, **characterised in that** the partition (20) is configured as an orifice cage (30) and comprises two orifice disks (32, 34), with a flexible elastic decoupling membrane (36) being inserted between the orifice disks (32, 34).

## Revendications

1. Support hydraulique (10), en particulier support hydraulique commutable, comportant un support porteur (12) et un appui (14) qui sont reliés l'un à l'autre par un ressort porteur élastomère (16), une chambre de travail (18) et une chambre de compensation (22) qui sont remplies d'un fluide (26) et séparées l'une de l'autre par une cloison de séparation (20) et reliées l'une à l'autre par un canal d'amortissement (28) réalisé dans la cloison de séparation (20), ainsi qu'un canal d'absorption (50) commutable par un organe de réglage (48),
dans lequel, dans une première position de commutation de l'organe de réglage (48), le canal d'absorption (50) est inactif, et dans une seconde position de l'organe de réglage (48), le canal d'absorption (50) est actif,
l'organe de réglage (48) comprend un électroaimant (54) à pilotage électrique et un induit (52) suspendu de façon oscillatoire par une membrane élastique (40), et
la membrane (40) est entourée par un élément de délimitation (64) qui est réalisé de telle sorte que la membrane (40) est en appui contre l'élément de délimitation (64) dans la première position de commutation, de sorte que la membrane (40) ne peut pas osciller de façon résonante, et est à distance de l'élément de délimitation (64) dans la seconde position de commutation,
**caractérisé en ce que**
l'élément de délimitation (64) est immobilisé sur l'induit (52).

2. Support hydraulique selon la revendication 1,
**caractérisé en ce que**
l'élément de délimitation (64) est réalisé sous la forme d'un écran conique (66).

3. Support hydraulique selon l'une des revendications précédentes,
**caractérisé en ce que**
l'élément de délimitation (64) fixe la membrane (40) à l'induit (52) par coopération de forme et/ou de force.

4. Support hydraulique selon l'une des revendications précédentes,
**caractérisé en ce que**
un orifice (38) est ménagé dans la cloison de séparation (20), l'orifice (38), la membrane élastique (40) et l'induit (52) définissant le canal d'absorption (50).

5. Support hydraulique selon l'une des revendications précédentes,
**caractérisé en ce que**
l'électroaimant (54) entoure une tige de guidage (58) qui fait saillie en direction axiale (A) et qui s'engage dans un puits (60) de l'induit (52) pour guider l'induit (52) en direction axiale (A).

6. Support hydraulique selon l'une des revendications précédentes,
**caractérisé en ce que**
l'induit (52) est réalisé en un matériau ferromagnétique.

7. Support hydraulique selon l'une des revendications précédentes,
**caractérisé en ce que**
l'électroaimant (54) entoure un aimant permanent (56).

8. Support hydraulique selon l'une des revendications précédentes,
**caractérisé en ce que**
l'électroaimant (54) est pilotable par un courant continu ou par un courant alternatif.

9. Support hydraulique selon l'une des revendications précédentes,
**caractérisé en ce que**
la membrane (40) est reliée d'un seul tenant à une membrane terminale (24) qui délimite la chambre de compensation (22).

10. Support hydraulique selon l'une des revendications précédentes,
**caractérisé en ce que**
la cloison de séparation (20) est réalisée sous forme de cage à buses (30) et comprend deux plaques de buse (32, 34), une membrane de découplage (36) élastique souple en flexion étant agencée entre les plaques de buse (32, 34).
